# EUROPEAN PATENT SPECIFICATION

(11) **EP 3 767 599 B1**
(45) Date of publication and mention of the grant of the patent: **14.01.2026**
(21) Application number: 18909952.6
(22) Date of filing: 01.11.2018
(51) Int. Cl.: A47B 88/457, G07F 11/60, G07F 11/24, A47B 46/00, G07F 11/04, G07F 9/02, B65G 1/04, A47B 81/00, B66F 11/00, G07F 11/16

(54) **STORAGE CABINET**
LAGERSCHRANK
ARMOIRE DE STOCKAGE

(30) Priority: 12.03.2018 CN 201820334934 U; 12.03.2018 CN 201820333644 U; 16.03.2018 CN 201820362782 U; 22.03.2018 CN 201820395439 U
(43) Date of publication of application: 20.01.2021
(73) Proprietor: Shenzhen Hive Box Technology Co., Ltd, Shenzhen, Guangdong 518000 (CN)
(72) Inventor: LEI, Honggang, Shenzhen, Guangdong 518000 (CN)
(74) Representative: Cabinet Beaumont
(86) International application number: PCT/CN2018/113311
(87) International publication number: WO 2019/174262

(56) References cited:
- WO-A1-2017/153920
- WO-A1-2017/153920
- CN-A- 106 348 029
- CN-A- 107 380 877
- CN-A- 108 074 356
- CN-A- 108 537 978
- CN-A- 108 629 916
- CN-U- 205 692 276
- US-A- 4 546 901
- US-B1- 6 370 841

## Description

This application is a European Union national phase application of co-pending international patent application number PCT/CN2018/113311, filed on November 1, 2018, which claims priority to four Chinese Patent Applications No. 201820334934.2 filed on March 12, 2018, No. 201820333644.6 filed on March 12, 2018, No. 201820362782.7 filed on March 16, 2018, and No. 201820395439.2 filed on March 22, 2018.

### TECHNICAL FIELD

The present disclosure relates to the technical field of storage cabinets, for example, to a storage cabinet.

### BACKGROUND

In recent years, the vigorous development of high-tech has improved people's quality of life, and brought convenience to people. For example, the current intelligent storage cabinet is generally an octagonal cabinet with only one access port. When an item is picked up, a position of a shelf is located by rotating a rotation mechanism inside the octagonal cabinet and lifting the rotation mechanism up and down in a vertical direction, so as to achieve the storage and pick-up of items. The octagonal cabinet has problems of a very complex structure, a very high cost and inconvenience of maintenance.

In the related art, an automatic mechanism for supplying empty trays in the storage cabinet stores a limited number of empty trays in a limited storage region. Therefore, when a customer stores items, especially stores items continuously, the empty trays for storage will gradually decrease and need to be replenished in time. However, in the related art, the empty trays in the storage cabinet need to be replenished manually at a high cost and with low efficiency.

WO 2017/153920 A1 discloses an automated kiosk that includes a storage structure housed by an enclosure, with the storage structure holding trays with items, a grabbing unit for picking up trays, a dispensing unit for delivering an item, a conveyer mechanism to position the grabbing unit and the dispensing unit and a control system. The tray holding an item is associated with the grabbing unit and the dispensing unit and delivers an item to a customer. The tray holding an item can be returned, stocked and restocked by the automated kiosk.

### SUMMARY

The invention provides a storage cabinet in accordance with appended claim 1. Advantageous embodiments are defined by the dependent claims.

### BRIEF DESCRIPTION OF DRAWINGS

The present application will be further described below in conjunction with the accompanying drawings and embodiments. In the accompanying drawings:
FIG. 1 is an internal structural view from a first perspective of a storage cabinet according to the first embodiment;
FIG. 2 is an internal structural view from a second perspective of the storage cabinet according to the first embodiment;
FIG. 3 is a structural view of an empty tray storage mechanism of the storage cabinet according to the first embodiment;
FIG. 4 is a structural view of a tray lifting assembly of the storage cabinet according to the first embodiment;
FIG. 5 is a structural view of a support plate according to the first embodiment;
FIG. 6 is a schematic view illustrating connections of a control mechanism according to the first embodiment;
FIG. 7 is a structural view of an empty tray storage mechanism of a storage cabinet according to the second embodiment;
FIG. 8 is a structural view 1 of a storage cabinet according to the third embodiment;
FIG. 9 is a structural view 2 of the storage cabinet according to the third embodiment;
FIG. 10 is a structural view of a telescopic car assembly of the storage cabinet according to the third embodiment;
FIG. 11 is a schematic view illustrating a connection between a rotating base and a second motor of the storage cabinet according to the third embodiment;
FIG. 12 is a schematic view illustrating a connection between a tray carrier assembly and a lifting part of the storage cabinet according to the third embodiment;
FIG. 13 is a structural view of a storage cabinet according to the fourth embodiment;
FIG. 14 is a structural view of a telescopic car assembly of the storage cabinet according to the fourth embodiment; and
FIG. 15 is a schematic view illustrating a connection between a linear guide rail and a rotating member of the storage cabinet according to the fourth embodiment.

### Reference list:

10. housing; 100. shelf; 101. tray positioning slot;
1. empty tray storage mechanism; 11. empty tray transmission mechanism; 111. transmission motor; 112. transmission track; 12. empty tray chassis;
13. driving motor; 14. conveyor belt; 15. groove;
2. control mechanism; 3. tray conveying mechanism; 31. rotary lifting assembly; 311. rotating motor; 312. rotating disc; 313. sliding track; 32. telescopic car assembly; 321. suction part; 322. support plate; 323. limiting plate; 3221. electromagnet; 3231. linear guide rail; 324. guide rail motor; 325. sliding roller; 326. support frame; 3261. bottom plate; 3262. side plate; 327. rotating member; 328. telescopic motor;
33. tray carrier assembly; 331. carrier base; 332. bracket;
34. lifting part; 341. mounting frame; 342. belt; 343. gear set; 344. first motor; 35. rotating part; 351. rotating base; 352. second motor;
36. lifting assembly; 361. support rod; 37. horizontal conveying assembly; 371. horizontal guide rail;
4. tray; 5. access port; 6. display screen; 8. interactive panel;
7. tray supply mechanism; 71. tray storage rack; 72. tray lifting assembly

### DETAILED DESCRIPTION

### First embodiment

Spatially related terms such as left, right, on and below in the present embodiment are utilized to describe spatial relationships of one or more component to another or utilized with reference to the normal utilization state of a product, and should not be considered to be restrictive.

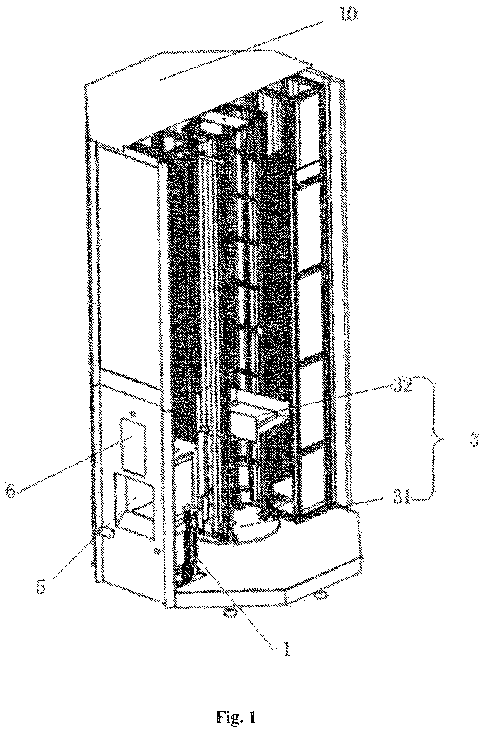

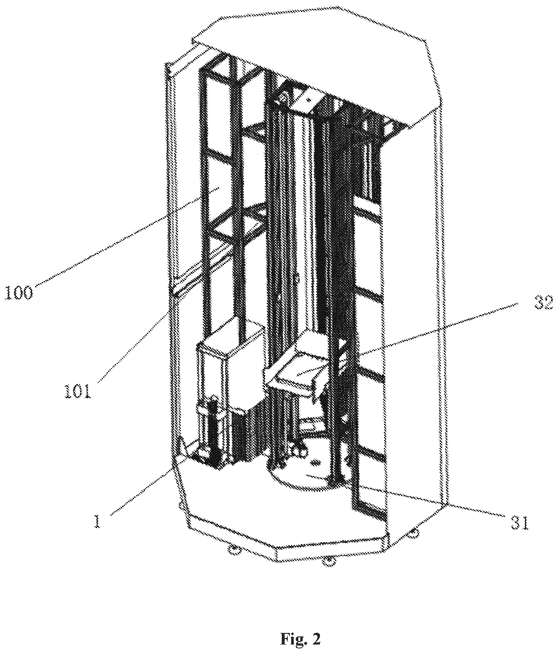

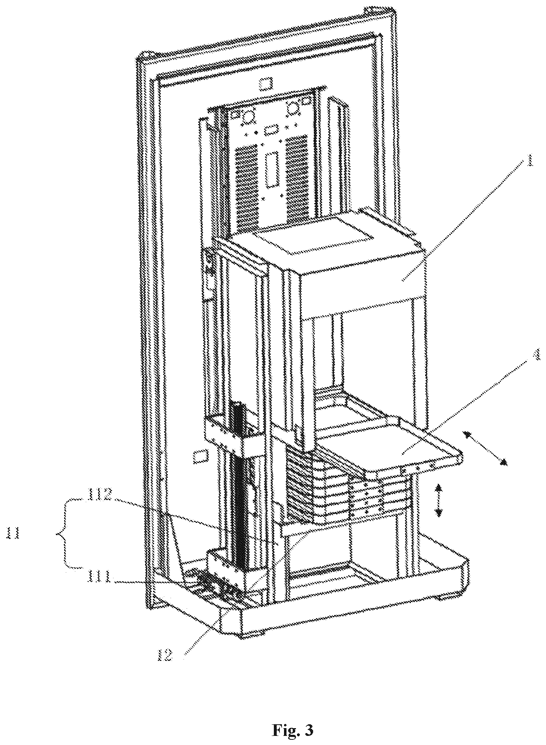

Referring to FIGS. 1 to 6, the present embodiment provides a storage cabinet, which is an express delivery cabinet capable of automatically replenishing empty trays, including a housing 10 and further provided with an empty tray storage mechanism 1, a control mechanism 2, a tray conveying mechanism 3 and a tray 4 in the housing 10, and the control mechanism 2 being electrically connected to the empty tray storage mechanism 1 and the tray conveying mechanism 3 separately. In an embodiment, the empty tray storage mechanism 1 includes an empty tray transmission mechanism 11 and an empty tray chassis 12, where a plurality of trays 4 is stacked on the empty tray chassis 12. The tray conveying mechanism 3 includes a rotary lifting assembly 31 and a telescopic car assembly 32. After the telescopic car assembly 32 sucks the tray 4, the tray 4 is driven to move in the housing 10 under the action of the rotary lifting assembly 31.

In an embodiment, all the plurality of trays 4 is stacked on the empty tray chassis 12 from top to bottom. The empty tray chassis 12 is driven by the empty tray transmission mechanism 11 to move up and down. The control mechanism 2 is a microprocessor. The microprocessor may collect an operation command on a screen and convert the operation command into a corresponding control instruction.

In an embodiment, a surface of the housing 10 is provided with an access port 5 for the storage and pick-up of an express delivery item. A user may pick up or store the express delivery item through the access port 5. The surface of the housing 10 is further provided with a display screen 6 located above the access port 5. The display screen 6 is configured to display an operation interface.

In an embodiment, the surface of the housing 10 is further provided with a rainproof shed (not shown in the figures), where the rainproof shed is disposed above the display screen 6. The rainproof shed is configured to prevent rain from seeping into the display screen 6 on rainy days and protect the display screen 6 from a display failure. Moreover, the rainproof shed is further configured to prevent water from seeping into the express delivery cabinet and prevent circuit damages when someone stores or picks up the express delivery item on rainy days.

In an embodiment, the empty tray transmission mechanism 11 includes a transmission motor 111 and a transmission track 112. The empty tray chassis 12 moves up and down along the transmission track 112 under the action of the transmission motor 111, so that the tray 4 on the empty tray chassis 12 can move to a predetermined height. In an embodiment, at an initial state of the empty tray storage mechanism 1, a height of the topmost tray 4 from the access port 5 is the predetermined height, where the predetermined height is a height of one tray. An amplitude of the vertical motion of the empty tray chassis 12 is also the predetermined height, that is, the motion amplitude is also the height of one tray. When the express delivery cabinet receives a storage instruction, the empty tray chassis 12, driven by the transmission motor 111, moves upwards by the height of one tray 4, and the topmost tray 4 is lifted to the access port 5 for a customer to put an item, and conveyed by the tray conveying mechanism 3 to a designated shelf 100 to implement the function of an automatic supply of trays 4.

In an embodiment, in response to a pick-up instruction, the empty tray chassis 12, driven by the transmission motor 111, moves downwards by the height of one tray 4 after the item is picked up, and the height of the topmost tray 4 from the access port 5 is restored to the height of one tray 4. In response to the storage instruction, the empty tray chassis 12, driven by the transmission motor 111, moves upwards by the height of one tray 4, and the height of the topmost tray 4 from the access port 5 is restored to the height of one tray 4.

In an embodiment, the rotary lifting assembly 31 includes a rotating motor 311, a rotating disc 312 and a sliding track 313. The rotating disc 312 is fixedly connected to the rotating motor 311, and the sliding track 313 is disposed on the rotating disc 312. In an embodiment, the rotating motor 311 adopts a stepping motor, the rotating disc 312 is a load-bearing circular disc, and the rotating disc 312 is further provided with a track for the telescopic car assembly 32 to move up and down.

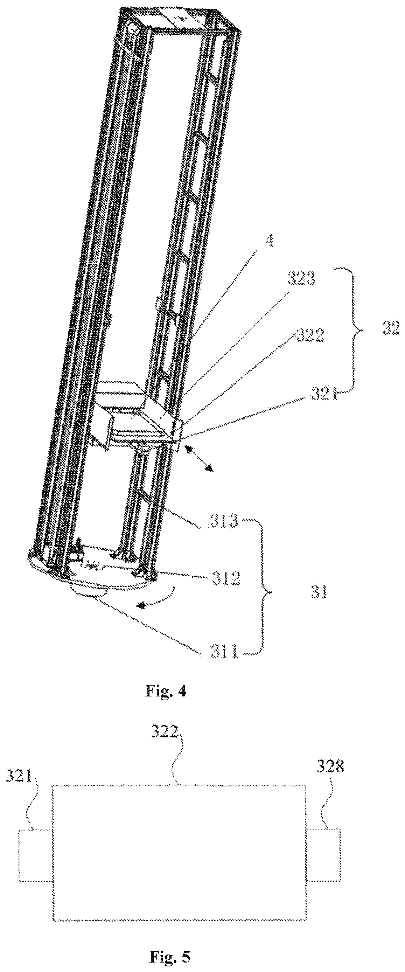

In an embodiment, referring to FIG 4 and FIG 5, the telescopic car assembly 32 includes a suction part 321, a telescopic motor 328 and a support plate 322. The telescopic motor 328 is connected to a first end of the support plate 322, and the suction part 321 is disposed at a second end of the support plate 322 farther from the telescopic motor 328. In an embodiment, the suction part 321 is a magnetic part, and can suck the tray 4 under the action of the control mechanism 2, and push the tray 4 into a designated position under the action of the telescopic motor 328 and release the tray 4 after the support plate 322 moves to a designated position.

In an embodiment, when a lower part of the empty tray storage mechanism 1 (i.e., a lower part of the empty tray chassis 12) is empty, that is, when there is no tray 4 in the lower part of the empty tray storage mechanism 1, the empty tray 4 can be automatically replenished when the express delivery cabinet is idle. After the rotary lifting assembly 31 and the telescopic car assembly 32 of the express delivery cabinet take out one tray 4 from the shelf 100 and place the tray 4 at the access port 5, the empty tray transmission mechanism 11 moves and drives the empty tray chassis 12 to move downwards by the height of one tray 4. At this time, all the trays 4 move downwards by the height of one tray 4 with the empty tray chassis 12, and the empty tray transmission mechanism returns to the initial state. The above actions are repeated, and empty trays 4 can be continuously replenished from top to bottom until the whole empty tray storage mechanism 1 is full, and the empty tray chassis 12 cannot move downwards. The process of automatically replenishing trays 4 is completed.

In an embodiment, a side of the support plate 322 is further provided with a limiting plate 323 which is vertical to the support plate 322 and seals three ends of the support plate 322. In an embodiment, a height of the limiting plate 323 is greater than the height of the tray 4. When the tray 4 with the express delivery item is rotated and lifted, the express delivery item is easy to fall off the tray 4. Therefore, the limiting plate 323 is provided on the support plate 322, so as to effectively prevent the express delivery item from falling off.

In an embodiment, a plurality of shelves 100 is provided in the housing 10, and the shelf 100 is provided with a plurality of tray positioning slots matched with the empty trays 4. In an embodiment, in order to improve the express capacity in the housing 10, the housing 10 of the express delivery cabinet may be configured as a regular octahedron, and the rotary lifting assembly 31 is located at the center of the regular octahedron. The plurality of shelves 100 is provided in the housing 10, and each shelf 100 is provided with tray positioning slots 101 in parallel. The rotary lifting assembly 31 can move the tray 4 with the express delivery item to a corresponding position on the shelf 100, or transfer the tray 4 on the shelf 100 to the empty tray storage mechanism 1 after the tray 4 is sucked by the suction part 321 of the telescopic car assembly 32.

To sum up, the storage cabinet provided by the present embodiment can automatically replenish empty trays 4, automatically move trays 4 to an outlet of the storage cabinet in the case of the storage and pick-up of items, and automatically replenish the empty trays 4 when the storage cabinet is idle, which saves manpower and improves working efficiency.

### Second embodiment

The embodiment provides a storage cabinet which provides another form of the empty tray storage mechanism 1. Other structures in the present embodiment are the same as those in the first embodiment and will not be repeated here. Referring to FIG. 1, FIG. 2 and FIGS. 4 to 7, the empty tray storage mechanism 1 includes a driving motor 13 and a conveyor belt 14. Grooves 15 matched with trays 4 are arranged at equal intervals on the conveyor belt 14, and an interval on the conveyor belt 14 is the height of one tray 4. The conveyor belt 14 is an aluminum alloy conveyor belt. Conveyor belts 14 are arranged on both sides of the tray conveying mechanism 3. Each of the conveyor belts on both sides is provided with the grooves 15 matched with the trays 4, and a height of a position of the groove 15 is the same as that of the tray 4. The conveyor belt 4 rotates anticlockwise to drive the tray 4 to move upwards under the action of the driving motor 13.

In the present embodiment, at the initial state of the empty tray storage mechanism 1, the height of the topmost tray 4 from the access port 5 is the predetermined height, where the predetermined height is the height of one tray 4. A distance that the conveyor belt 14 moves each time is the predetermined height, that is, the motion distance is also the height of one tray 4. When the storage cabinet receives the storage instruction, the conveyor belt 14, driven by the driving motor 13, moves upwards by the height of one tray 4, and the topmost tray 4 is lifted to the access port 5 for the customer to put the item. The tray 4 is moved to a designated shelf 100 by the rotary lifting assembly 31 and the telescopic car assembly 32 to implement the function of an automatic supply of empty trays 4.

When the empty tray storage mechanism 1 is empty and there is no tray 4 in the empty tray storage mechanism 1, the empty trays 4 can be automatically replenished when the storage cabinet is idle. After an empty tray 4 is taken out from the shelf 100 by the rotary lifting assembly 31 and the telescopic car assembly 32 of the storage cabinet, the empty tray 4 is directly placed at a position without the tray 4 of the empty tray storage mechanism 1. The above actions are repeated, and the empty trays 4 can be continuously replenished from top to bottom until the whole empty tray storage mechanism 1 is full. The function of automatically replenishing empty trays 4 is implemented.

### Third embodiment not in accordance with the claimed invention

Spatially related terms such as left, right, on and below in the present embodiment are utilized to describe spatial relationships of one or more component to another or utilized with reference to the normal utilization state of a product, and should not be considered to be restrictive.

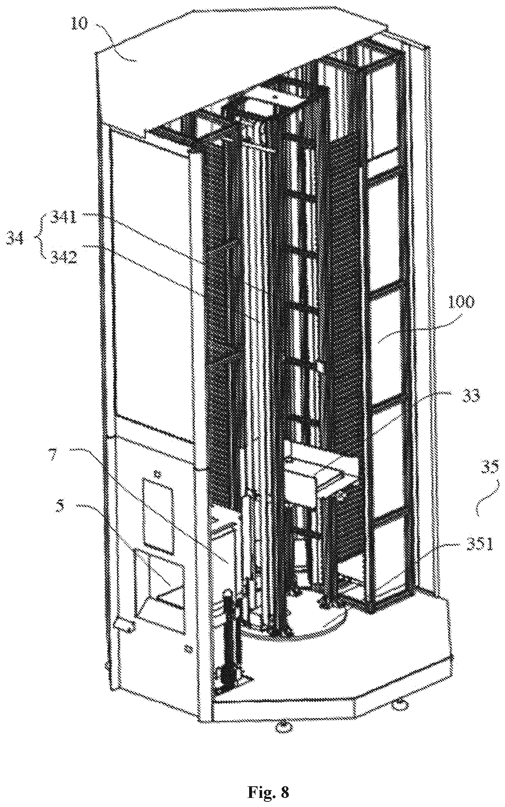

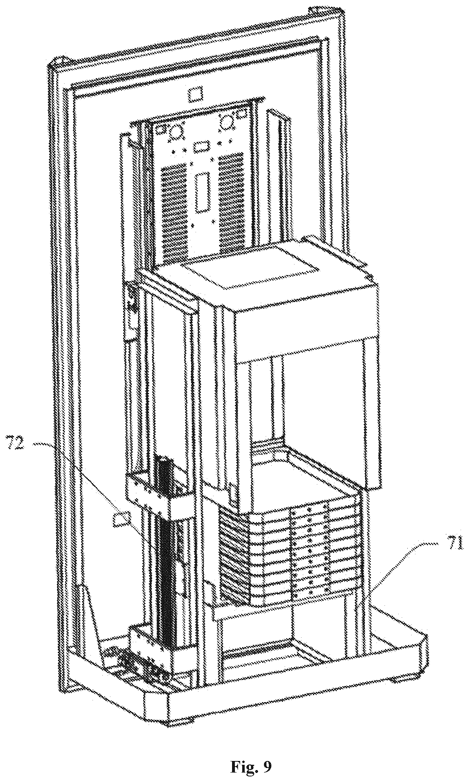

Referring to FIGS. 8 to 12, the present embodiment provides a storage cabinet which has the function of automatically supplying trays 4. On the basis of the first embodiment and the second embodiment, the present embodiment provides another form of the tray conveying mechanism 3. The tray conveying mechanism 3 includes a lifting transmission assembly, which is disposed in the storage cabinet. The lifting transmission assembly is configured to acquire the tray 4 and lift and rotate the tray 4. The tray conveying mechanism 3 further includes a power assembly configured to drive the lifting transmission assembly to run and connected to the lifting transmission assembly.

In addition, on the basis of the first embodiment, the storage cabinet in the present embodiment is further provided with a tray supply mechanism 7, which is located on a side of the access port 5 and includes a tray storage rack 71 for storing trays 4 and a tray lifting assembly 72 for controlling the trays 4 on the tray storage rack 71 to be lifted. The tray storage rack 71 is connected to the tray lifting assembly 72. Such a structure can automatically manage the trays 4 and is convenient for the telescopic car assembly 32 to quickly suck the tray 4, improving storage efficiency.

In the present embodiment, the tray supply mechanism 7 may be designed at a lower side, upper side, left side or right side of the access port 5, so long as the empty tray 4 can be quickly supplied to the access port 5.

When the storage instruction is received, the tray 4 is lifted up by the tray lifting assembly 72 on one side of the access port 5, so as to quickly supply one tray 4 to the access port 5 for the customer to store the item. The tray conveying mechanism 3 does not need to search the shelf 100 for the tray 4 and convey the empty tray 4 to the access port 5. The process of searching for the empty tray 4 and conveying the tray 4 is omitted. After the customer finishes picking up the item, the tray 4 is lifted down and placed on the tray storage rack 71 for spare use, which greatly improves the storage efficiency and user experience.

Referring to FIG. 8, in the storage cabinet that can automatically supply trays 4 in the present embodiment, the lifting transmission assembly is provided with a tray carrier assembly 33 and the telescopic car assembly 32 configured to take and deliver the tray 4. The telescopic car assembly 32 is disposed on the tray carrier assembly 33.

In the present embodiment, the telescopic car assembly 32 includes an electromagnet 3221 configured to suck the empty tray, a linear guide rail 3231 configured to move the electromagnet 3221, a guide rail motor 324 for driving the linear guide rail 3231 to run, and a plurality of columns of sliding rollers 325 configured to enable the tray 4 to slide to the tray carrier assembly 33, where the guide rail motor 324 is connected to the linear guide rail 3231. In the present embodiment, the linear guide rail 3231 is disposed on a lower side of the tray carrier assembly 33, the sliding rollers 325 are arranged on the tray carrier assembly 33, and the electromagnet 3221 is connected to the tray carrier assembly 33 and the linear guide rail 3231.

After the storage cabinet receives the storage instruction and completes scanning and weighing, the linear guide rail 3231 extends, the electromagnet 3221 on the linear guide rail 3231 is electrified to suck the tray 4, then the linear guide rail 3231 retracts to make the tray 4 be placed on the sliding rollers 325, the tray 4 is placed on the tray carrier assembly 33 through the sliding rollers 325, and then the electromagnet 3221 of the tray carrier assembly 33 sucks the tray 4 and locates it.

In the present embodiment, the tray 4 is made of iron or other materials that can be attracted by a magnet, or the tray 4 is provided with iron or other materials that can be attracted by the magnet at both ends of the tray 4, so as to reduce the weight and material cost of the tray 4. Of course, the telescopic car assembly 32 may also adopt other methods, such as the way of picking up the tray by a manipulator, which is not limited in the present embodiment.

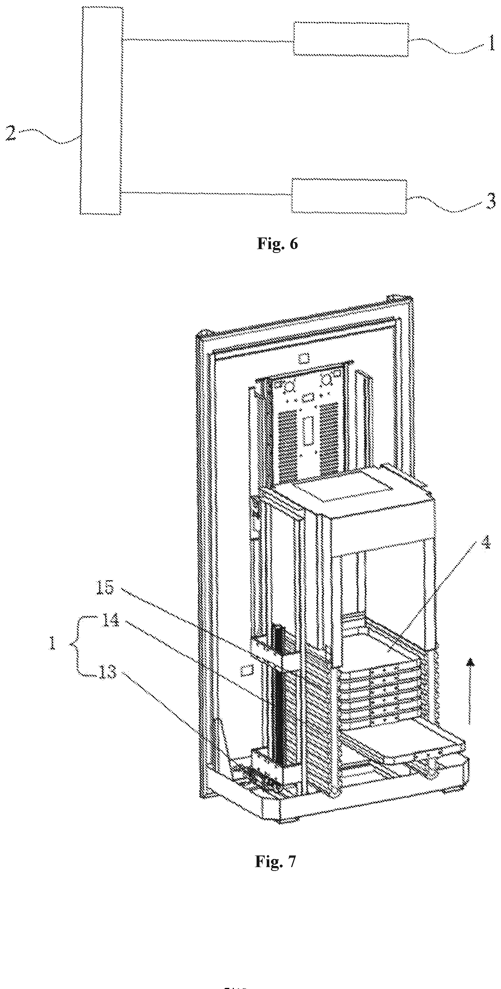

Referring to FIG. 6 to FIG. 8, the tray carrier assembly 33 includes a carrier base 331 which is provided with a bracket 332 installed with the sliding rollers 325. A plurality of sliding rollers 325 may be installed on the bracket 332. The plurality of sliding rollers 325 may be arranged in multiple rows and in multiple columns and has a structure similar to an abacus, which is convenient for the tray 4 to slide onto the carrier base 331 smoothly.

In an embodiment, the lifting transmission assembly includes a lifting part 34 configured to lift the tray carrier assembly 33 up and down and a rotating part 35 configured to rotate the tray carrier assembly 33. The tray carrier assembly 33 is disposed on the lifting part 34, and the lifting part 34 is disposed on the rotating part 35. The rotating part 35 can quickly align with a position of an empty cabinet lattice on the shelf 100 and quickly align with the empty cabinet lattice for storing an item through the lifting part 34.

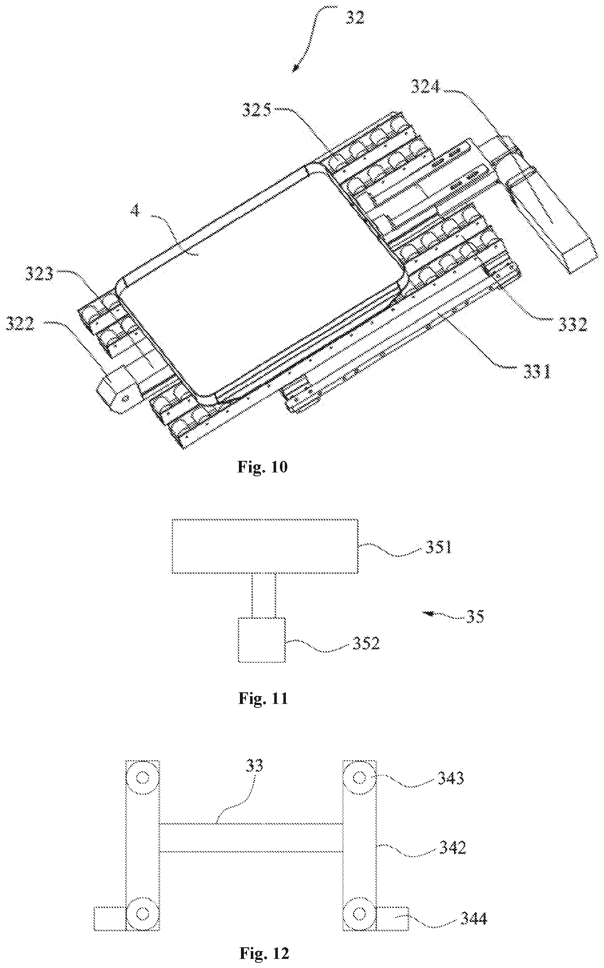

In the present embodiment, as shown in FIG. 8 and FIG. 12, the lifting part 34 includes a mounting frame 341, a belt 342 configured to lift the tray carrier assembly 33 up and down, a gear set 343 for driving the belt 342 to rotate, and a first motor 344 configured to drive the gear set 343 to rotate. The first motor 344 and the gear set 343 are disposed on the mounting frame 341, the first motor 344 is connected to the gear set 343, and the gear set 343 is connected to the belt 342.

During operation, the first motor 344 drives the gear set 343 to rotate, so that the belt 342 runs to drive the tray carrier assembly 33 to be lifted up and down. The mounting frame 341 is configured to support the belt 342, the first motor 344, the gear set 343, and guide a running direction of the belt 342.

Referring to FIG. 8 and FIG. 11, the rotating part 35 includes a rotating base 351 and a second motor 352 configured to drive the rotating base 351 to rotate. The second motor 352 is disposed on the rotating base 351, and the rotating base 351 is a circle or a regular polygon which is stable and reliable during rotation.

In an embodiment, the housing 10 of the storage cabinet is a polyhedral structure, such as an octahedral structure. Such a structure takes up a small space and can be provided with more cabinet lattices.

In an embodiment, the storage cabinet is an express delivery cabinet, an item deposit cabinet, an automatic sales cabinet or a book lending cabinet. Therefore, the storage cabinet in the present embodiment can be configured to store, deliver and pick up express delivery items, temporarily store items around a shopping mall, sale and supply goods for a vending machine, and lend books in a library.

A storage process or a pick-up process of the storage cabinet in the present embodiment is described in detail in combination with FIG. 8 and FIG. 12.

The customer inputs the storage instruction on an interactive screen of the storage cabinet. The tray lifting assembly 72 lifts the tray 4 up by the height of one tray 4, such that the tray 4 is located at the access port 5, and the customer may place a parcel on the tray 4. after the parcel is scanned, weighed and confirmed as being able to be stored, the linear guide rail 3231 is controlled to move to enable the electromagnet 3221 on the linear guide rail 3231 to attract the tray 4 and bring the tray 4 onto the sliding rollers 325 on the tray carrier assembly 33, and then the tray 4 is placed on the tray carrier assembly 33 though the sliding rollers 325, sucked and located by the electromagnet 3221. Then the rotating part 35 rotates the tray 4 to a column of shelves 100 for storing the tray 4, the lifting part 34 lifts the tray carrier assembly 33 to the position of the cabinet lattice for storing the tray 4, and the linear guide rail 3231 moves to place the tray 4 on the cabinet lattice for storing the tray 4.

When a pick-up instruction is received, the storage cabinet operates in a reverse way to the storage process described above, and the pick-up process will not be detailed here.

In summary, when the storage cabinet in the present embodiment receives the storage instruction, the tray supply mechanism 7 on one side of the access port 5 quickly supplies an empty tray 4 to the access port 5 for the customers to store an item without searching the shelf 100 for the tray 4 and taking the tray 4 to the access port 5, thereby omitting the process of searching for the tray 4 and conveying the tray 4, and improving the storage efficiency and the user experience. The present embodiment improve the storage efficiency of the storage cabinet and a degree of intelligence of the storage cabinet.

Moreover, the storage cabinet has an octahedral structure or a polyhedral structure which takes up a small space and can store many items. At the same time, the present embodiment can be configured to store, deliver and pick up express delivery items, temporarily store items around the shopping mall, sale and supply goods for the vending machine, and lend books in the library, and is suitable for use on a variety of occasions.

### Fourth embodiment not in accordance with the claimed invention

Spatially related terms such as left, right, on and below in the present embodiment are utilized to describe spatial relationships of one or more component to another or utilized with reference to the normal utilization state of a product, and should not be considered to be restrictive.

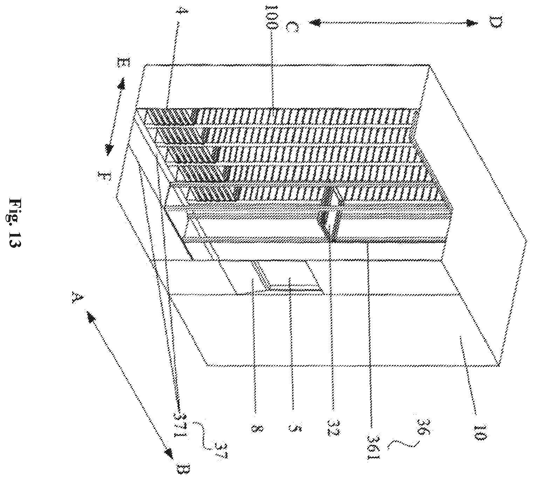

Referring to FIG. 13, the present embodiment provides a storage cabinet, which is an intelligent storage cabinet, and may be an express delivery cabinet, an item deposit cabinet, an automatic sales cabinet or a book lending cabinet. The intelligent storage cabinet is configured to store items or take out items. A plurality of trays 4, a plurality of shelves 100 and a tray conveying mechanism 3 are provided in a housing 10 of the storage cabinet. The present embodiment provides another form of the tray conveying mechanism 3 on the basis of the first embodiment, the second embodiment and the third embodiment. The tray conveying mechanism 3 includes a telescopic car assembly 32 configured to pick up and place a tray 4, a lifting assembly 36 configured to lift the telescopic car assembly 32 and a horizontal conveying assembly 37 configured to move the lifting assembly 36 in a horizontal direction. A control mechanism 2 controls working states of the lifting assembly 36, the horizontal conveying assembly 37 and the telescopic car assembly 32.

The lifting assembly 36, the horizontal conveying assembly 37, and the telescopic car assembly 32 are all electrically connected to the control mechanism 2. The lifting assembly 36 is slidably disposed on the horizontal conveying assembly 37 and moves back and forth along the horizontal conveying assembly 37 under the action of the control mechanism 2. The telescopic car assembly 32 is slidably disposed on the lifting assembly 36, moves back and forth along the lifting assembly 37 under the action of the control mechanism 2, and extends forwards and retracts backwards under the action of the control mechanism 2, so as to acquire a tray 4 on a predetermined shelf 100 and move the tray 4 to the access port 5, or placed a tray 4 at the access port 5 on the predetermined shelf 100. A front-back direction in the present embodiment is indicated by an arrow EF in FIG. 13.

Referring to FIG. 13, in an embodiment, the shelves 100 are in one row or two rows, and each row of shelves 100 is arranged in multiple columns, and all the shelves 100 are arranged in a matrix. The number of shelves 100 may be the same as or different from the number of trays 4. In the present embodiment, when two rows of shelves 100 are used, the horizontal conveying assembly 37 is located between the two rows of shelves 100, so that the horizontal conveying assembly 37, the lifting assembly 36 and the telescopic car assembly 32 can move freely in a middle space of the two rows of shelves 100.

The access port 5 is used as a window for a user to pick up items and for a courier to deliver items. A shape of the access port 5 may be a square, a circle or other shapes in different embodiments. The access port 5 may be provided on a sidewall of the housing 10 closer to the shelves 100 and may also be provided on a sidewall of the housing 10 installed with no shelf 100.

With continued reference to FIG. 13, the tray 4 is a carrier for carrying an item during transportation; the lifting assembly 36 includes four support rods 361, the horizontal conveying assembly 37 includes horizontal guide rails 371, and the four support rods 361 are slidably arranged on the horizontal guide rails 371. The support rods 361 can make the lifting assembly 36 move left and right along the horizontal guide rails 371 under the action of the control mechanism 2, where a left-right direction is a direction from A to B or a direction from B to A in FIG 13.

The telescopic car assembly 32 is slidably disposed on the lifting assembly 36, and may move up and down along the lifting assembly 36 under the action of the control mechanism 2, where an up-down direction is a direction from C to D or a direction from D to C in FIG. 13.

The telescopic car assembly 32, as a device for picking up and placing the tray 4, may suck the tray 4 and place the tray 4 on the shelf 100 by moving forwards and backwards. The control mechanism 2 may be a control computer, etc., and configured to control the working states of the lifting assembly 36, the horizontal conveying assembly 37 and the telescopic car assembly 32. When a user picks up an item, the lifting assembly 36 and the telescopic car assembly 32 move to a predetermined position under the action of the control mechanism 2 to acquire the tray 4 on the predetermined shelf 100 and move the tray 4 to the access port 5, and then the window of the access port 5 automatically opens. When the storage (delivery or mail) instruction is received, the lifting assembly 36 and the telescopic car assembly 32 move to a predetermined position under the action of the control mechanism 2 to acquire the tray 4 and move the tray 4 to the access port 5, and then the window of the access port 5 automatically opens for the user to put the item in. After the user confirms that the item is placed, the lifting assembly 36, the horizontal conveying assembly 37 and the telescopic car assembly 32 move to the predetermined shelf 100 under the action of the control mechanism 2 to place the tray 4 on the predetermined shelf 100. The above solution is adopted to avoid large relative movement inside, so that the structure is simple, the cost is low, and it is more convenient for staff to maintain.

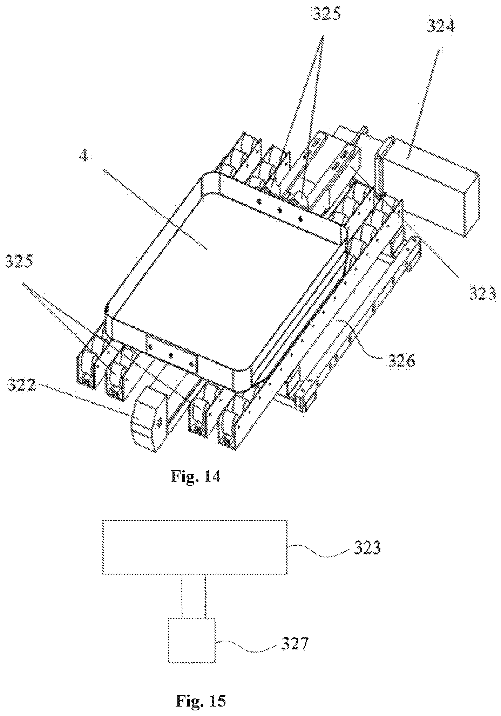

Referring to FIG 14, the telescopic car assembly 32 in the present embodiment is different from the telescopic car assembly 32 in the first embodiment. The telescopic car assembly 32 in the present embodiment includes a guide rail motor 324, an electromagnet 3221, a linear guide rail 3231, sliding rollers 325 and a support frame 326, where the electromagnet 3221 is configured to suck the tray 4, the linear guide rail 3231 is configured to move the electromagnet 3221, the guide rail motor 324, the linear guide rail 3231, the electromagnet 3221 and the sliding rollers 325 are all installed on the support frame 326, the electromagnet 3221 is disposed on the linear guide rail 3231, and the guide rail motor 324 may drive the linear guide rail 3231 to move back and forth under the action of the control mechanism 2, so as to move the electromagnet 3221 to a predetermined position (such as the position of the access port 5) to suck the tray 4 and then reset to place the tray 4 on the sliding rollers 325. Under the action of the control mechanism 2, the lifting assembly 36, the horizontal conveying assembly 37 and the telescopic car assembly 32 work together to convey the tray 4 on the sliding rollers 325 to the predetermined shelf 100. The above structure has a simple structure, can accurately control multiple components to work together for the storage and pick-up of items, and is also convenient for staff to maintain.

In an embodiment, when one row of shelves 100 is used, the shelves 100 and the access port 5 may be arranged on the same side. When an item is to be picked up, the guide rail motor 324 may drive the linear guide rail 3231 to move forwards and backwards under the action of the control mechanism 2, so as to drive the electromagnet 3221 to move and suck the tray 4, and then the telescopic car assembly 32 is enabled to move to the access port 5 in an AB or BA direction. A volume and an occupied space of the housing 10 can be greatly reduced by adopting the above structure.

When two rows of shelves 100 are used, the telescopic car assembly 32 further includes a rotating member 327 configured to control the linear guide rail 3231 to rotate by 180 degrees. As shown in FIG 15, the rotating member 327 is connected to the linear guide rail 3231. The electromagnet 3221 faces the shelves 100 on one side under the control of the control mechanism 2. When the tray 4 on the shelf 100 on an opposite side needs to be taken and placed, the rotating member 327 controls the linear guide rail 3231 to rotate by 180 degrees, so that the electromagnet 3221 is reversed with an initial position and then sucks the tray 4. In order to adapt to the height of the electromagnet 3221 and the height of the tray 4, the linear guide rail 3231 may be appropriately lowered before the rotating member 327 works to stagger the electromagnet 3221 and the tray 4, the linear guide rail 3231 is rotated by 180 degrees, and the linear guide rail 3231 is raised and reset.

In an embodiment, when the user stores an item, a sensor at the access port 5 can detect the weight, height, and volume of the item to be stored, and calculate the number of layers of the shelf 100 occupied by the item according to the height of the item, so as to place the item on the shelf 100 with a proper height and facilitate the reasonable use of a limited space inside the intelligent storage cabinet.

In an embodiment, the support frame 326 includes a bottom plate 3261 and a side plate 3262 surrounding the bottom plate 3261. The bottom plate 3261 and the side plate 3262 form an opening facing the shelf 100 and the access port 5. The above structure is adopted to prevent goods from moving sideways during transportation or storage, or even falling down during transportation. In other embodiments, the support frame 326 may not be provided with the bottom plate 3261, and be provided with only the side plate 3262 to prevent the goods from moving sideways during transportation or storage, or even falling down during transportation, which is not specifically limited.

In an embodiment, the housing 10 is provided with an interactive panel 8 configured for human-computer interaction, so as to provide the user with a good operation interface and operation guidance, and improve the convenience of operation of the intelligent storage cabinet. For example, the user may select a type, a size and the like of the stored item or input information such as a pick-up code through the interactive panel 8, which are listed one by one.

In an embodiment, the intelligent storage cabinet further includes at least one of an ID card recognizer (not shown in the figures), a camera (not shown in the figures), and a scanner (not shown in the figures). The ID card recognizer is configured to read user identity information; the camera is configured to recognize a face and match the face with the user identity information or monitor the surrounding environment to prevent the user identity information from being fraudulently used; and the scanner is configured to quickly read item information or payment information, such as barcodes, QR codes, and 3D codes of orders, so as to provide the user with more convenient services.

In an embodiment, the housing 10 is a rectangular parallelepiped, which can reduce the space occupied by the intelligent storage cabinet and facilitate the cooperative operation of multiple internal components.

In an embodiment, the housing 10 further includes a display screen 6 configured for advertisement placement, effectively utilizing space.

In order to better describe a working principle of the intelligent storage cabinet of the present embodiment and a process of cooperation of multiple components, the item pick-up and delivery process of the intelligent storage cabinet is illustrated in combination with the accompanying drawings by using the intelligent storage cabinet as the express delivery cabinet.

When the customer inputs the storage instruction on an interactive screen of the storage cabinet, the control mechanism 2 controls a tray supply mechanism 7 (referring to the tray supply mechanism 7 in the third embodiment) to supply an empty tray 4 to the access port 5, and the customer may place a parcel on the tray 4. After the parcel is scanned and weighted, its height is calculated, and it is confirmed that the parcel meets standard requirements and the shelf 100 has space for storage, the control mechanism 2 controls the lifting assembly 36 to move in a vertical direction and the horizontal conveying assembly 37 to move in a horizontal direction, so as to align the telescopic car assembly 32 with a position of the tray. The control mechanism 2 further controls the linear guide rail 3231 to move to make the electromagnet 3221 on the linear guide rail 3231 suck the tray and control the linear guide rail 3231 to reset to place the tray 4 on the sliding rollers 325. Then the lifting assembly 36 moves in the vertical direction and the horizontal conveying assembly 37 moves in the horizontal direction to align the telescopic car assembly 32 with the shelf 100 for storing the tray. When the shelf 100 for storing the tray is on the same side as the access port 5, it is only necessary to make the electromagnet 3221 suck the tray 4 and then the linear guide rail 3231 extends to place the tray 4 on the shelf 100 for storing the tray. When the shelf 100 for storing the tray is on the opposite side, the linear guide rail 3231 is rotated by 180 degrees to make the electromagnet 3221 locate at the other end of the tray 4, and then the linear guide rail 3231 extends to place the tray 4 on the shelf 100 for storing the tray.

When a pick-up instruction is received, the storage cabinet operates in a reverse way to the above-mentioned storage process, and the pick-up process will not be detailed here.

In summary, in the intelligent storage cabinet provided by the present embodiment, the horizontal conveying assembly moves horizontally, the lifting assembly is lifted up and down, and the telescopic car assembly moves forwards and backwards under the action of the control mechanism 2, so that the telescopic car assembly moves to a predetermined position to acquire the tray 4 on the predetermined shelf 100 and the telescopic car assembly moves to the access port 5 or place the tray 4 on the predetermined shelf 100. The intelligent storage cabinet has the characteristics of a simple structure, a low cost, and convenience of maintenance. At the same time, the intelligent storage cabinet occupies a small space, is highly intelligent, and brings convenience to people's lives and is suitable for popularization and application.

## Claims

1. A storage cabinet, comprising:
a housing (10), provided with an access port (5) for storage and pick-up of an item;
a plurality of shelves (100), disposed in the housing (10);
a plurality of trays (4), disposed on the shelves (100);
a tray conveying mechanism (3), disposed in the housing (10); and
a control mechanism (2), electrically connected to the tray conveying mechanism (3), and configured to control the tray conveying mechanism (3) to convey a tray (4) on the shelves (100) to the access port (5), and the tray conveying mechanism (3) comprises a rotary lifting assembly (31) and a telescopic car assembly (32);
the storage cabinet further comprising: an empty tray storage mechanism (1) electrically connected to the control mechanism (2);
wherein the empty tray storage mechanism (1) comprises a driving motor (13) for empty trays (4) and a conveyor belt (14), wherein the conveyor belt (14) comprises grooves (15) arranged at equal intervals on the conveyor belt (14) and matched with the trays (4), each interval on the conveyor belt (14) is a height of one of the trays (4), and the conveyor belt (14) is an aluminium alloy conveyor belt, wherein when the storage cabinet receives a storage instruction, the conveyor belt (14) is configured to, driven by the driving motor (13), move upwards by the height of one of the tray (4) and a topmost tray (4) is lifted to the access port (5), and the rotary lifting assembly (31) and the telescopic car assembly (32) are configured to move the topmost tray (4) to a designated shelf (100); and when the empty tray storage mechanism (1) is empty and the storage cabinet is idle, the rotary lifting assembly (31) and the telescopic car assembly (32) are configured to take out a tray (4) from the designated shelf (100) and place the tray (4) at a position without any tray (4) of the empty tray storage mechanism (1), and wherein the rotary lifting assembly and the telescopic car assembly are configured to repeat these actions until the empty tray storage mechanism (1) is full; or,
wherein the empty tray storage mechanism (1) comprises an empty tray transmission mechanism (11) and an empty tray chassis (12), wherein multiple trays (4) are stacked on the empty tray chassis (12); and the empty tray transmission mechanism (11) comprises a transmission motor (111) and a transmission track (112), wherein the transmission motor (111) is configured to drive the empty tray chassis (12) to move on the transmission track (112), such that the multiple trays (4) on the empty tray chassis (12) move a predetermined height equal to a height of one of the multiple trays (4), wherein when the storage cabinet receives a storage instruction, the empty tray chassis (12) is configured to, driven by the transmission motor (111), move upwards by the height of one of the tray (4) and a topmost tray (4) is lifted to the access port (5), and the tray conveying mechanism (3) is configured to move the topmost tray (4) to a designated shelf (100); and
when a lower part of the empty tray storage mechanism (1) is empty and the storage cabinet is idle, the rotary lifting assembly (31) and the telescopic car assembly (32) are configured to take out a tray (4) from the designated shelf (100) and place the tray (4) in the access port (5), the empty tray transmission mechanism (11) is configured to move and drive the empty tray chassis (12) to move downwards by the height of one of the tray (4), and the rotary lifting assembly, the telescopic car assembly and the empty tray transmission mechanism are configured to repeat these actions until the empty tray storage mechanism (1) is full.

2. The storage cabinet according to claim 1, wherein the telescopic car assembly (32), is further configured to suck the tray (4) and move the tray (4) in the housing (10).

3. The storage cabinet according to claim 2, wherein the rotary lifting assembly (31) is further configured to: after the telescopic car assembly (32) sucks the tray (4), drive the tray to move in the housing (10), wherein the rotary lifting assembly (31) comprises a rotating motor (311), a rotating disc (312) and a sliding track (313), wherein the rotating disc (312) is fixedly connected to the rotating motor (311), and the sliding track (313) is disposed on the rotating disc (312).

4. The storage cabinet according to claim 2, wherein the telescopic car assembly (32) comprises a suction part (321), a telescopic motor (328), a support plate (322) and a limiting plate (323), wherein the telescopic motor (328) is connected to a first end of the support plate (322), the suction part (321) is disposed at a second end of the support plate (322) farther from the telescopic motor (328) than the first end, and the limiting plate (323) is disposed on a side of the support plate (322), is vertical to the support plate (322), and seals three ends of the support plate (322).

5. The storage cabinet according to claim 4, wherein the limiting plate (323) has a height greater than a height of one of the trays (4).

6. The storage cabinet according to claim 1, wherein each of the shelves (100) is provided with a plurality of tray positioning slots (101) matched with the trays (4).

7. The storage cabinet according to claim 2, wherein the telescopic car assembly (32) comprises an electromagnet (3221) configured to suck the tray (4), a linear guide rail (3231) configured to move the electromagnet (3221), a guide rail motor (324) configured to drive the linear guide rail (3231) to run and a plurality of columns of sliding rollers (325), wherein the guide rail motor (324) is configured to drive the linear guide rail (3231) to move along a preset direction to drive the electromagnet (3221) to move and suck the tray, place the tray (4) on the sliding rollers (325), and convey the tray (4) on the sliding rollers (325) to a predetermined shelf (100).

8. The storage cabinet according to claim 7, wherein the tray conveying mechanism (3) further comprises:
a lifting transmission assembly, disposed in the storage cabinet and configured to acquire the tray (4) and lift and rotate the tray (4);
a power assembly, configured to drive the lifting transmission assembly to run and connected to the lifting transmission assembly; and
a tray carrier assembly (33), disposed on the lifting transmission assembly, wherein the telescopic car assembly (32) is disposed on the tray carrier assembly (33); the plurality of columns of sliding rollers (325) is configured to slide the trays (4) onto the tray carrier assembly (33); the linear guide rail (3231) is disposed on a lower side of the tray carrier assembly (33), the plurality of columns of sliding rollers (325) is arranged on the tray carrier assembly (33), and the electromagnet (3221) is disposed on the tray carrier assembly (33) and the linear guide rail (3231).

9. The storage cabinet according to claim 8, wherein the tray carrier assembly (33) comprises a carrier base (331), wherein the carrier base (331) comprises a bracket (332) installed with the sliding rollers (325).

10. The storage cabinet according to claim 9, wherein the lifting transmission assembly comprises a lifting part (34) configured to lift the tray carrier assembly (33) and a rotating part (35) configured to rotate the tray carrier assembly (33), wherein the tray carrier assembly (33) is disposed on the lifting part (34), and the lifting part (34) is disposed on the rotating part (35).

11. The storage cabinet according to claim 10, wherein the lifting part (34) comprises a support frame (326), a belt (342) configured to enable the tray carrier assembly (33) to move up and down, a gear set (343) configured to drive the belt (342) to rotate and a first motor (344) configured to drive the gear set (343) to rotate; wherein the first motor (344) and the gear set (343) are disposed on the support frame (326), the first motor (344) is connected to the gear set (343), and the gear set (343) is connected to the belt (342).

12. The storage cabinet according to claim 10, wherein the rotating part (35) comprises a rotating base (351) and a second motor (352) configured to drive the rotating base (351) to rotate, the second motor (352) is disposed on the rotating base (351).

13. The storage cabinet according to claim 7, wherein the tray conveying mechanism (3) further comprises:
a lifting assembly (36), configured to lift the telescopic car assembly (32); and
a horizontal conveying assembly (37), configured to move the lifting assembly (36) in a horizontal direction; wherein
the control mechanism (2) is electrically connected to the lifting assembly (36), the horizontal conveying assembly (37) and the telescopic car assembly (32), separately, so as to control working states of the lifting assembly (36), the horizontal conveying assembly (37) and the telescopic car assembly (32); the lifting assembly (36) is slidably disposed on the horizontal conveying assembly (37) and configured to move back and forth along the horizontal conveying assembly (37) under a control of the control mechanism (2); the telescopic car assembly (32) is slidably disposed on the lifting assembly (36) and configured to move back and forth along the lifting assembly (36) and extend forwards and retract backwards in a preset direction under the control of the control mechanism (2), so as to acquire a tray (4) on the predetermined shelf (100) and move the tray (4) to the access port (5), or place a tray (4) at the access port (5) on the predetermined shelf (100).

## Patentansprüche

1. Lagerschrank, umfassend:
ein Gehäuse (10), versehen mit einer Zugriffsöffnung (5) zum Einlagern und Entnehmen eines Gegenstands;
mehrere Regale (100), die im Gehäuse (10) angeordnet sind;
mehrere Tabletts (4), die auf den Regalen (100) angeordnet sind;
einen Tablettfördermechanismus (3), der im Gehäuse (10) angeordnet ist; und
einen Steuermechanismus (2), der elektrisch mit dem Tablettfördermechanismus (3) verbunden und derart ausgestaltet ist, den Tablettfördermechanismus (3) zu steuern, dass ein Tablett (4) auf den Regalen (100) zur Zugriffsöffnung (5) gefördert wird, wobei der Tablettfördermechanismus (3) eine Drehhebeeinheit (31) und eine Teleskopfahrwagenbaugruppe (32) umfasst;
wobei der Lagerschrank ferner einen Leertablettspeichermechanismus (1) umfasst, der elektrisch mit dem Steuermechanismus (2) verbunden ist;
wobei der Leertablettspeichermechanismus (1) einen Antriebsmotor (13) für Leertabletts (4) und ein Förderband (14) umfasst, wobei das Förderband (14) Nuten (15) aufweist, die in gleichen Abständen auf dem Förderband (14) angeordnet und an die Tabletts (4) angepasst sind, wobei jeder Abstand auf dem Förderband (14) der Höhe eines der Tabletts (4) entspricht und das Förderband (14) ein Aluminiumlegierungs-Förderband ist, wobei, wenn der Lagerschrank eine Einlagerungsanweisung erhält, das Förderband (14) ausgestaltet ist, angetrieben durch den Antriebsmotor (13), sich um die Höhe eines der Tabletts (4) nach oben zu bewegen, sodass ein oberstes Tablett (4) zur Zugriffsöffnung (5) angehoben wird und die Drehhebeeinheit (31) und die Teleskopfahrwagenbaugruppe (32) ausgestaltet sind, das oberste Tablett (4) zu einem vorbestimmten Regal (100) zu bewegen, und wenn der Leertablettspeichermechanismus (1) leer ist und der Lagerschrank unbeschäftigt ist, wobei die Drehhebeeinheit (31) und die Teleskopfahrwagenbaugruppe (32) ausgestaltet sind, ein Tablett (4) aus dem vorbestimmten Regal (100) zu entnehmen und das Tablett (4) an einer Position ohne Tablett (4) des Leertablettspeichermechanismus (1) abzulegen und wobei die Drehhebeeinheit und die Teleskopfahrwagenbaugruppe ausgestaltet sind, diese Aktionen zu wiederholen, bis der Leertablettspeichermechanismus (1) voll ist; oder,
wobei der Leertablettspeichermechanismus (1) einen Leertablettübertragungsmechanismus (11) und ein Leertablettchassis (12) umfasst, wobei mehrere Tabletts (4) auf dem Leertablettchassis (12) gestapelt sind; und der Leertablettübertragungsmechanismus (11) einen Übertragungsmotor (111) und eine Übertragungsschiene (112) umfasst, wobei der Übertragungsmotor (111) ausgestaltet ist, das Leertablettchassis (12) auf der Übertragungsschiene (112) zu bewegen, sodass sich die mehreren Tabletts (4) auf dem Leertablettchassis (12) um eine vorbestimmte Höhe bewegen, die der Höhe eines der mehreren Tabletts (4) entspricht, wobei, wenn der Lagerschrank eine Einlagerungsanweisung erhält, das Leertablettchassis (12), angetrieben durch den Übertragungsmotor (111), derart ausgestaltet ist, sich um die Höhe eines der Tabletts (4) nach oben zu bewegen und ein oberstes Tablett (4) zur Zugriffsöffnung (5) angehoben wird und der Tablettfördermechanismus (3) ausgestaltet ist, das oberste Tablett (4) zu einem vorbestimmten Regal (100) zu bewegen; und wenn ein unterer Teil des Leertablettspeichermechanismus (1) leer ist und der Lagerschrank unbeschäftigt ist, die Drehhebeeinheit (31) und die Teleskopfahrwagenbaugruppe (32) ausgestaltet sind, ein Tablett (4) aus dem vorbestimmten Regal (100) zu entnehmen und das Tablett (4) in der Zugriffsöffnung (5) zu platzieren und der Leertablettübertragungsmechanismus (11) ausgestaltet ist, sich zu bewegen und das Leertablettchassis (12) um die Höhe eines der Tabletts (4) nach unten zu bewegen, und die Drehhebeeinheit, die Teleskopfahrwagenbaugruppe und der Leertablettübertragungsmechanismus derart ausgestaltet sind, diese Aktionen zu wiederholen, bis der Leertablettspeichermechanismus (1) voll ist.

2. Lagerschrank nach Anspruch 1, wobei die Teleskopfahrwagenbaugruppe (32) ferner ausgestaltet ist, das Tablett (4) anzusaugen und das Tablett (4) im Gehäuse (10) zu bewegen.

3. Lagerschrank nach Anspruch 2, wobei die Drehhebeeinheit (31) ferner ausgestaltet ist: nachdem die Teleskopfahrwagenbaugruppe (32) das Tablett (4) angesaugt hat, das Tablett im Gehäuse (10) zu bewegen, wobei die Drehhebeeinheit (31) einen Rotationsmotor (311), eine Rotationsscheibe (312) und eine Gleitbahn (313) umfasst, wobei die Rotationsscheibe (312) fest mit dem Rotationsmotor (311) verbunden ist und die Gleitbahn (313) auf der Rotationsscheibe (312) angeordnet ist.

4. Lagerschrank nach Anspruch 2, wobei die Teleskopfahrwagenbaugruppe (32) ein Ansaugteil (321), einen Teleskopmotor (328), eine Stützplatte (322) und eine Begrenzungsplatte (323) umfasst, wobei der Teleskopmotor (328) mit einem ersten Ende der Stützplatte (322) verbunden ist und das Ansaugteil (321) an einem zweiten Ende der Stützplatte (322) angeordnet ist, das weiter vom Teleskopmotor (328) entfernt ist als das erste Ende, wobei die Begrenzungsplatte (323) an einer Seite der Stützplatte (322) angeordnet ist, senkrecht zur Stützplatte (322) steht und drei Enden der Stützplatte (322) abdichtet.

5. Lagerschrank nach Anspruch 4, wobei die Begrenzungsplatte (323) eine Höhe aufweist, die größer ist als die Höhe eines der Tabletts (4).

6. Lagerschrank nach Anspruch 1, wobei jedes der Regale (100) mit mehreren Tablettpositionierungsnuten (101) versehen ist, die an die Tabletts (4) angepasst sind.

7. Lagerschrank nach Anspruch 2, wobei die Teleskopfahrwagenbaugruppe (32) einen Elektromagneten (3221), der zum Ansaugen des Tabletts (4) ausgestaltet ist, eine Linearschiene (3231), die zum Bewegen des Elektromagneten (3221) ausgestaltet ist, einen Schienenmotor (324), der zum Antreiben der Linearschiene (3231) ausgestaltet ist, sowie mehrere Spalten von Gleitrollen (325) umfasst, wobei der Schienenmotor (324) ausgestaltet ist, die Linearschiene (3231) entlang einer vorbestimmten Richtung zu bewegen, um den Elektromagneten (3221) zu bewegen und das Tablett anzusaugen, das Tablett (4) auf den Gleitrollen (325) zu platzieren und das Tablett (4) auf den Gleitrollen (325) zu einem vorbestimmten Regal (100) zu fördern.

8. Lagerschrank nach Anspruch 7, wobei der Tablettfördermechanismus (3) weiter umfasst:
eine Hebetransmissionseinheit, die im Lagerschrank angeordnet und ausgestaltet ist, das Tablett (4) aufzunehmen und das Tablett (4) anzuheben und zu drehen;
eine Antriebseinheit, die zum Antreiben der Hebetransmissionseinheit ausgestaltet und mit der Hebetransmissionseinheit verbunden ist; und
eine Tablettträgerbaugruppe (33), die an der Hebetransmissionseinheit angeordnet ist, wobei die Teleskopfahrwagenbaugruppe (32) an der Tablettträgerbaugruppe (33) angeordnet ist; die mehreren Spalten von Gleitrollen (325) ausgestaltet sind, die Tabletts (4) auf die Tablettträgerbaugruppe (33) zu schieben; die Linearschiene (3231) an der Unterseite der Tablettträgerbaugruppe (33) angeordnet ist; die mehreren Spalten von Gleitrollen (325) an der Tablettträgerbaugruppe (33) angeordnet sind; und der Elektromagnet (3221) an der Tablettträgerbaugruppe (33) und der Linearschiene (3231) angeordnet ist.

9. Lagerschrank nach Anspruch 8, wobei die Tablettträgerbaugruppe (33) eine Trägerbasis (331) umfasst, wobei die Trägerbasis (331) eine Halterung (332) umfasst, die mit Gleitrollen (325) versehen ist.

10. Lagerschrank nach Anspruch 9, wobei die Hebetransmissionseinheit ein Hebeteil (34), das zum Anheben der Tablettträgerbaugruppe (33) ausgestaltet ist, und ein Drehteil (35) umfasst, das zum Drehen der Tablettträgerbaugruppe (33) ausgestaltet ist, wobei die Tablettträgerbaugruppe (33) am Hebeteil (34) angeordnet ist und das Hebeteil (34) am Drehteil (35) angeordnet ist.

11. Lagerschrank nach Anspruch 10, wobei das Hebeteil (34) einen Stützrahmen (326), ein Band (342), das zum Bewegen der Tablettträgerbaugruppe (33) nach oben und unten ausgestaltet ist, ein Zahnradset (343), das zum Antreiben des Bands (342) ausgestaltet ist, und einen ersten Motor (344) umfasst, der zum Antreiben des Zahnradsets (343) ausgestaltet ist, wobei der erste Motor (344) und das Zahnradset (343) am Stützrahmen (326) angeordnet sind, der erste Motor (344) mit dem Zahnradset (343) verbunden ist und das Zahnradset (343) mit dem Band (342) verbunden ist.

12. Lagerschrank nach Anspruch 10, wobei das Drehteil (35) eine Drehbasis (351) und einen zweiten Motor (352) umfasst, der zum Antreiben der Drehbasis (351) ausgestaltet ist, wobei der zweite Motor (352) an der Drehbasis (351) angeordnet ist.

13. Lagerschrank nach Anspruch 7, wobei der Tablettfördermechanismus (3) weiter umfasst:
eine Hebebaugruppe (36), die zum Anheben der Teleskopfahrwagenbaugruppe (32) ausgestaltet ist; und
eine horizontale Förderbaugruppe (37), die zum Bewegen der Hebebaugruppe (36) in horizontaler Richtung ausgestaltet ist; wobei
der Steuermechanismus (2) elektrisch getrennt mit der Hebebaugruppe (36), der horizontalen Förderbaugruppe (37) und der Teleskopfahrwagenbaugruppe (32) verbunden ist, um die Arbeitszustände der Hebebaugruppe (36), der horizontalen Förderbaugruppe (37) und der Teleskopfahrwagenbaugruppe (32) zu steuern; die Hebebaugruppe (36) ist verschiebbar an der horizontalen Förderbaugruppe (37) angeordnet und ausgestaltet, sich unter der Steuerung des Steuermechanismus (2) entlang der horizontalen Förderbaugruppe (37) vor- und zurückzubewegen; die Teleskopfahrwagenbaugruppe (32) ist verschiebbar an der Hebebaugruppe (36) angeordnet und ausgestaltet, sich unter der Steuerung des Steuermechanismus (2) entlang der Hebebaugruppe (36) vor- und zurückzubewegen und sich in einer vorbestimmten Richtung nach vorn zu erstrecken und nach hinten einzufahren, um ein Tablett (4) auf dem vorbestimmten Regal (100) aufzunehmen und das Tablett (4) zur Zugriffsöffnung (5) zu bewegen oder ein Tablett (4) an der Zugriffsöffnung (5) auf dem vorbestimmten Regal (100) zu platzieren.

## Revendications

1. Armoire de stockage, comprenant :
un boîtier (10), pourvu d'un port d'accès (5) pour le stockage et la collecte d'un article ;
une pluralité d'étagères (100), disposées dans le boîtier (10) ;
une pluralité de plateaux (4), disposés sur les étagères (100) ;
un mécanisme de transport de plateaux (3), disposé dans le boîtier (10) ; et
un mécanisme de commande (2), raccordé électriquement au mécanisme de transport de plateaux (3), et conçu pour commander le mécanisme de transport de plateaux (3) pour transporter un plateau (4) sur les étagères (100) au port d'accès (5), et le mécanisme de transport de plateaux (3) comprend un ensemble de levage rotatif (31) et un ensemble automobile téléscopique (32) ;
l'armoire de stockage comprenant, en outre, un mécanisme de stockage de plateaux vides (1) raccordé électriquement au mécanisme de commande (2) ;
dans laquelle le mécanisme de stockage de plateaux vides (1) comprend un moteur d'entraînement (13) pour plateaux vides (4) et une bande transporteuse (14), dans laquelle la bande transporteuse (14) comprend des rainures (15) agencées à intervalles égaux sur la bande transporteuse (14) et assorties aux plateaux (4), chaque intervalle sur la bande transporteuse (14) est une hauteur d'un des plateaux (4), et la bande transporteuse (14) est une bande transporteuse en alliage d'aluminium, dans laquelle, lorsque l'armoire de stockage reçoit une instruction de stockage, la bande transporteuse (14) est conçue pour, entraînée par le moteur d'entraînement (13), se déplacer vers le haut de la hauteur de l'un des plateaux (4) et un plateau supérieur (4) est levé vers le port d'accès (5), et l'ensemble de levage rotatif (31) et l'ensemble automobile téléscopique (32) sont conçus pour déplacer le plateau supérieur (4) vers une étagère désignée (100) ; et lorsque le mécanisme de stockage de plateaux vides (1) est vide et l'armoire de stockage est inactive, l'ensemble de levage rotatif (31) et l'ensemble automobile téléscopique (32) sont conçus pour retirer un plateau (4) de l'étagère désignée (100) et placer le plateau (4) à une position sans aucun plateau (4) du mécanisme de stockage de plateaux vides (1), et dans laquelle l'ensemble de levage rotatif et l'ensemble automobile téléscopique sont conçus pour répéter ces actions jusqu'à ce que le mécanisme de stockage de plateaux vides (1) soit plein ; ou,
dans laquelle le mécanisme de stockage de plateaux vides (1) comprend un mécanisme de transmission pour plateaux vides (11) et un châssis pour plateaux vides (12), dans laquelle plusieurs plateaux (4) sont empilés sur le châssis pour plateaux vides (12) ; et
le mécanisme de transmission pour plateaux vides (11) comprend un moteur de transmission (111) et un rail de transmission (112), dans laquelle le moteur de transmission (111) est conçu pour entraîner le châssis pour plateaux vides (12) pour le déplacer sur le rail de transmission (112), de telle sorte que les plusieurs plateaux (4) sur le châssis pour plateaux vides (12) se déplacent d'une hauteur prédéterminée égale à la hauteur de l'un des plusieurs plateaux (4), dans laquelle lorsque l'armoire de stockage reçoit une instruction de stockage, le châssis pour plateaux vides (12) est conçu pour, entraîné par le moteur de transmission (111), se déplacer vers le haut de la hauteur de l'un des plateaux (4) et un plateau supérieur (4) est levé vers le port d'accès (5), et le mécanisme de transport de plateaux (3) est conçu pour déplacer le plateau supérieur (4) vers une étagère désignée (100) ; et lorsqu'une partie inférieure du mécanisme de stockage de plateaux vides (1) est vide et l'armoire de stockage est inactive, l'ensemble de levage rotatif (31) et l'ensemble automobile téléscopique (32) sont conçus pour retirer un plateau (4) de l'étagère désignée (100) et placer le plateau (4) dans le port d'accès (5), le mécanisme de transmission pour plateaux vides (11) est conçu pour se déplacer et entraîner le châssis pour plateaux vides (12) à se déplacer vers le bas de la hauteur de l'un des plateaux (4), et l'ensemble de levage rotatif, l'ensemble automobile téléscopique et le mécanisme de transmission pour plateaux vides sont conçu pour répéter ces actions jusqu'à ce que le mécanisme de stockage de plateaux vides (1) soit plein.

2. Armoire de stockage selon la revendication 1, dans laquelle l'ensemble automobile téléscopique (32) est en outre conçu pour aspirer le plateau (4) et pour déplacer le plateau (4) dans le boîtier (10).

3. Armoire de stockage selon la revendication 2, dans laquelle l'ensemble de levage rotatif (31) est en outre conçu pour : après que l'ensemble automobile téléscopique (32) a aspiré le plateau (4), entraîner le plateau à se déplacer dans le boîtier (10), dans laquelle l'ensemble automobile téléscopique (31) comprend un moteur rotatif (311), un disque rotatif (312) et un rail coulissant (313), dans laquelle le disque rotatif (312) est raccordé de manière fixe au moteur rotatif (311), et le rail coulissant (313) est disposé sur le disque rotatif (312).

4. Armoire de stockage selon la revendication 2, dans laquelle l'ensemble automobile téléscopique (32) comprend une partie d'aspiration (321), un moteur télescopique (328), une plaque de support (322) et une plaque de limitation (323), dans laquelle le moteur télescopique (328) est raccordé à une première extrémité de la plaque de support (322), la partie d'aspiration (321) est disposée au niveau d'une deuxième extrémité de la plaque de support (322) plus éloignée du moteur télescopique (328) que la première extrémité, et la plaque de limitation (323) est disposée sur un côté de la plaque de support (322), est verticale par rapport à la plaque de support (322), et scelle trois extrémités de la plaque de support (322).

5. Armoire de stockage selon la revendication 4, dans laquelle la plaque de limitation (323) présente une hauteur supérieure à la hauteur de l'un des plateaux (4).

6. Armoire de stockage selon la revendication 1, dans laquelle chacune des étagères (100) est pourvue d'une pluralité d'encoches de positionnement de plateaux (101) assorties aux plateaux (4).

7. Armoire de stockage selon la revendication 2, dans laquelle l'ensemble automobile téléscopique (32) comprend un électroaimant (3221) conçu pour aspirer le plateau (4), un rail de guidage linéaire (3231) conçu pour déplacer l'électroaimant (3221), un moteur de rail de guidage (324) conçu pour entraîner le rail de guidage linéaire (3231) à fonctionner et une pluralité de colonnes de rouleaux coulissants (325), dans laquelle le moteur de rail de guidage (324) est conçu pour entraîner le rail de guidage linéaire (3231) à se déplacer le long d'une direction prédéfinie pour entraîner l'électroaimant (3221) à se déplacer et aspirer le plateau, placer le plateau (4) sur les rouleaux coulissants (325) et transporter le plateau (4) sur les rouleaux coulissants (325) vers une étagère prédéfinie (100).

8. Armoire de stockage chaise selon la revendication 7, dans laquelle le mécanisme de transport de plateaux (3) comprend en outre ;
un ensemble de transmission de levage, disposé dans l'armoire de stockage et conçu pour acquérir le plateau (4) et lever et tourner le plateau (4) ;
un ensemble de puissance pour entraîner l'ensemble de transmission de levage à fonctionner et raccordé à l'ensemble de transmission de levage ; et
un ensemble porteur de plateaux (33), disposé sur l'ensemble de transmission de levage, dans laquelle l'ensemble automobile téléscopique (32) est disposé sur l'ensemble porteur de plateaux (33) ; la pluralité de colonnes de rouleaux coulissants (325) est conçue pour faire glisser les plateaux (4) sur l'ensemble porteur de plateaux (33) ; le rail de guidage linéaire (3231) est disposé sur un côté inférieur de l'ensemble porteur de plateaux (33), la pluralité de colonnes de rouleaux coulissants (325) est agencée sur l'ensemble porteur de plateaux (33), et l'électroaimant (3221) est disposé sur l'ensemble porteur de plateaux (33) et le rail de guidage linéaire (3231).

9. Armoire de stockage selon la revendication 8, dans laquelle l'ensemble porteur de plateaux (33) comprend une base porteuse (331), dans laquelle la base porteuse (331) comprend un support (332) installé avec les rouleaux coulissants (325).

10. Armoire de stockage selon la revendication 9, dans laquelle l'ensemble de transmission de levage comprend une partie de levage (34) conçue pour lever l'ensemble porteur de plateaux (33) et une partie rotative (35) conçue pour faire tourner l'ensemble porteur de plateaux (33), dans laquelle l'ensemble porteur de plateaux (33) est disposé sur la partie de levage (34), et la partie de levage (34) est disposée sur la partie rotative (35).

11. Armoire de stockage selon la revendication 10, dans laquelle la partie de levage (34) comprend un cadre de support (326), une courroie (342) conçue pour permettre à l'ensemble porteur de plateaux (33) de se déplacer vers le haut et le bas, un train d'engrenages (343) conçu pour entraîner la courroie (342) à tourner et un premier moteur (344) conçu pour entraîner le train d'engrenages (343) à tourner ; dans laquelle le premier moteur (344) et le train d'engrenages (343) sont disposés sur le cadre de support (326), le premier moteur (344) est raccordé au train d'engrenages (343), et le train d'engrenages (343) est raccordé à la courroie (342).

12. Armoire de stockage selon la revendication 10, dans laquelle la partie rotative (35) comprend une base rotative (351) et un deuxième moteur (352) conçu pour entraîner la base rotative (351) à tourner, le deuxième moteur (352) est disposé sur la base rotative (351).

13. Armoire de stockage chaise selon la revendication 7, dans laquelle le mécanisme de transport de plateaux (3) comprend en outre ;
un ensemble de levage (36) conçu pour lever l'ensemble automobile téléscopique (32) ; et
un ensemble de transport horizontal (37), conçu pour déplacer l'ensemble de levage (36) dans une direction horizontale ; dans laquelle
le mécanisme de commande (2) est raccordé électriquement séparément à l'ensemble de levage (36), à l'ensemble de transport horizontal (37) et à l'ensemble automobile téléscopique (32), de façon à contrôler des états de fonctionnement de l'ensemble de levage (36), de l'ensemble de transport horizontal (37) et de l'ensemble automobile téléscopique (32) ; l'ensemble de levage (36) est disposé de manière coulissante sur l'ensemble de transport horizontal (37) et conçu pour se déplacer en va-et-vient le long de l'ensemble de transport horizontal (37) sous une commande du mécanisme de commande (2) ; l'ensemble automobile téléscopique (32) est disposé de manière coulissante sur l'ensemble de levage (36) et conçu pour se déplacer en va-et-vient le long de l'ensemble de levage (36) et s'étendre vers l'avant et se rétracter vers l'arrière dans une direction prédéfinie sous la commande du mécanisme de commande (2), de façon à acquérir un plateau (4) sur l'étagère prédéterminée (100) et à déplacer le plateau (4) vers le port d'accès (5) ou à placer le plateau (4) au niveau du port d'accès (5) sur l'étagère prédéterminée (100).
